# EUROPÄISCHE PATENTANMELDUNG

(11) **EP 1 043 533 A2**
(43) Veröffentlichungstag der Anmeldung: **11.10.2000**
(21) Anmeldenummer: 99124607.5
(22) Anmeldetag: 10.12.1999
(51) Int. Cl.: F16L 3/24

(54) **Halterung zur Lagerung eines Rohrschlittens**

(30) Priorität: 08.04.1999 DE 19915781
(71) Anmelder: Witzenmann GmbH Metallschlauch-Fabrik Pforzheim, D-75175 Pforzheim (DE)
(72) Erfinder:
(74) Vertreter: Lemcke, Rupert, Dipl.-Ing.

(57) **Zusammenfassung**

Es wird eine Halterung zur Lagerung eines Rohrschlittens auf einem Flansch eines Profilträgers mit zwei im Abstand zueinander angeordneten Paaren von Klemmbacken angegeben, wobei die Klemmbacken je eine Flanschkante mit einer Klemmnut umgreifen, die durch einen Klemmbackenkörper und ein sich daran anschließenden und schräg unterhalb des Klemmbackenkörpers von diesem fort sich erstreckenden Schenkel gebildet ist. Dabei ist vorgesehen, daß die auf den Klemmbakkenkörper zu gerichtete Spannfläche des Schenkels über wenigstens einen Teil dessen Längserstreckung einen bogenförmigen, gegenüber dem Klemmbackenkörper konkaven Verlauf aufweist.

## Beschreibung

Die Erfindung betrifft eine Halterung zur Lagerung eines Rohrschlittens auf einem Flansch eines Profilträgers mit zwei im Abstand zueinander angeordneten Paaren von Klemmbacken, die paarweise durch Spannmittel miteinander verbunden sind und den Rohrschlitten durch wenigstens ein ihn auf der flanschabgewandten Seite hintergreifendes Führungselement jedes Klemmbackenpaares gegen Abheben vom Flansch sichern, wobei die Klemmbacken je eine Kante des Flansches mit einer Klemmnut umgreifen, die durch einen im wesentlichen quaderförmigen und auf der Flanschoberfläche aufliegenden Klemmbackenkörper und ein sich daran endständig anschließenden und schräg unterhalb des Klemmbackenkörpers von diesem fort sich erstreckenden Schenkel gebildet ist.

Eine derartige Halterung ist als Gleitlagerung für den Rohrschlitten beispielsweise durch die DE 31 10 716 bekannt. Dort sind die Klemmbacken Metallgußteile, die Führungsnuten für den Rohrschlitten aufweisen und im Zusammenhang damit jede mit einem Führungselement ausgestattet sind. Durch diese Gestaltung sind die bekannten Klemmbacken verhältnismäßig kostspielig und in der Herstellung kompliziert. Dies insbesondere auch im Hinblick auf die weitere Gestaltung der Führungsnut, die dafür sorgen soll, daß der Rohrschitten nicht auf der Oberfläche des Flansches sondern auf den Klemmbacken gleitet.

Was den Schenkel der die zugeordnete Kante des Flansches umgreifenden Klemmnut betrifft, so verläuft dieser mit einer Schrägstellung im Bereich von 40°, wie dies bei Halterungen der in Rede stehenden Gattung allgemein üblich ist. Damit nun beim Anziehen der Spannmittel die einander gegenüberstehenden Klemmbacken eines jeden Klemmbackenpaares nicht aufeinander zu kippen können, muß dem Klemmbackenkörper und damit dessen Auflage auf der Flanschoberfläche in Richtung der Spannmittel eine erhebliche Größe gegeben werden, will man die Lagerung größerer Rohre an entsprechend stark dimensionierten Profilträgern vornehmen. Dies führt jedoch dazu, daß solche Klemmbacken für die Lagerung kleinerer Rohre an entsprechend leichter und kleiner dimensionierten Profilträgern nicht verwendet werden können, da dann bei den entsprechend näher beieinanderliegenden Kanten des schmaleren Profilträgerflansches die Klemmbackenkörper in der genannten Spannrichtung zu groß sind. Hier bedarf es also der Herstellung und Bereithaltung wenigstens einer weiteren Klemmbackengröße; denn würde man zur Abdeckung der geschilderten Bedarfsfälle lediglich die Größe der Klemmbackenkörper in der genannten Spannrichtung verringern, erbrächte dies für die Lagerung großer Rohre ein Kippen der Klemmbacken in Folge der auf sie wirkenden Spannkräfte, damit ein Verbiegen der Spannmittel und letztendlich im Betrieb ein allmähliches Lösen der Halterung.

Das geschilderte Erfodernis mehrerer Klemmbackengrößen zur Bewältigung der Lagerung unterschiedlich großer Rohre an entsprechend unterschiedlich dimensionierten Profilträgern bringt jedoch eine entsprechend umfangreiche Lagerhaltung und damit verbunden einen erheblichen Planungsaufwand mit sich, was im Ergebnis zu einer Verteuerung der in Rede stehenden Halterung führt.

Aufgabe der Erfindung ist es daher, die Gestaltung von Klemmbacken der eingangs genannten Art dahingehend vorzunehmen, daß sie sich bei Verwendung einer Klemmbackengröße zur Herstellung aller praktisch vorkommenden Halterungen eignen, also unabhängig von der Flanschbreite und -dicke Verwendung finden können, ohne daß die Gefahr eines Kippens der Klemmbacken und damit eine Beeinträchtigung der Verlässlichkeit der Halterung im Betrieb besteht.

Diese Aufgabe ist ausgehend von einer Halterung der eingangs genannten Art erfindungsgemäß dadurch gelöst, daß die auf den Klemmbackenkörper zu gerichtete Spannfläche des Schenkels über wenigstens einen Teil dessen Längserstreckung einen bogenförmigen, gegenüber dem Klemmbakkenkörper konkaven Verlauf aufweist. Dabei kommt es insbesondere darauf an, daß die Spannfläche des Schenkels den bogenförmigen Verlauf im Bereich dessen freien Endes aufweist. Vorteilhafterweise ist jedoch die gesamte Spannfläche des Schenkels bogenförmig ausgebildet.

Diese erfindungsgemäße Maßnahme hat die Wirkung, daß gegenüber der bekannten geradlinigen Schrägstellung sich nunmehr die Spannfläche des jeweiligen Schenkels der Unterseite des Trägerflansches entsprechend dem genannten bogenförmigen Verlauf annähert mit der Folge, daß die auf dem jeweiligen Spannflächenabschnitt senkrechte Kraftrichtung immer am Klemmbackenkörper ihr Widerlager und damit ihre Reaktionskraft findet, obwohl dieser in Wirkrichtung der ein Klemmbackenpaar verbindenden Spannmittel wesentlich kürzer ausgebildet ist als dies bisher zur Abdekkung auch von Halterungen an breiten Trägerflanschen erforderlich war. Damit verbindet sich aber nun auch die Möglichkeit, mit für Halterungen an breiten Trägerflanschen geeigneten Klemmbacken auch Halterungen an schmalen Profilträgerflanschen erstellen zu können, da sich dabei nunmehr die Klemmbackenkörper entsprechend nah beeinander positionierter Klemmbacken eines Paares nicht mehr im Wege sind. Entsprechend reduziert sich der Aufwand für die Lagerhaltung bei der Bevorratung der Klemmbacken sowie für die Planung entsprechender Bauprojekte mit dem Ergebnis einer Verringerung der Kosten für die einzelne Halterung.

Im Rahmen der Erfindung liegt es, daß die Spannfläche des Schenkels im Bereich dessen freien Endes gegenüber der Ebene der Flanschoberfläche einen Winkel im Bereich von 15 bis 30° aufweist, wobei sich hier zur Abdeckung der praktisch vorkommenden Bedarfsfälle ein Winkel im Bereich von 23° als zweckmäßig erwiesen hat.

Andererseits liegt es im Rahmen der Erfindung, daß die Spannfläche des Schenkels im Bereich dessen Ansatzes am Klemmbackenkörper gegenüber der Ebene der Flanschoberfläche einen Winkel im Bereich von 70 bis 90° aufweist, wobei sich hier ein Winkel im Bereich von 80° als zweckmäßig erwiesen hat.

Die vorstehenden Winkelangaben geben Aufschluß über die Gestalt des bogenförmigen Verlaufes der Spannfläche des Schenkels, wobei dieser bogenförmige Verlauf vorteilhafterweise stufenlos gestaltet ist. Als zweckmäßig und ausreichend hat es sich hier erwiesen, daß der bogenförmige Verlauf der Spannfläche des Schenkels durch einen Kreisbogen gebildet ist.

Entsprechend dem vorstehend Gesagten ist es nunmehr ein Merkmal der Erfindung, daß der Klemmbackenkörper sich mit seinem freien Ende auf der Flanschoberfläche wenigstens soweit erstreckt, daß die Senkrechten auf allen Spannflächen Abschnitten des Schenkels das Material des Klemmbackenkörpers durchqueren.

In weiterer Ausbildung hat es sich als vorteilhaft erwiesen, daß im Übergangsbereich zwischen auf der Flanschoberfläche aufliegender Fläche des Klemmbackenkörpers und Spannfläche des Schenkels eine abgerundete, oberhalb der Flanschoberfläche im Klemmbackenkörper gelegene Kerbe angeordnet ist. Dies verringert in an sich bekannter Weise die in diesem Bereich auftretenden Kerbspannungen, gibt aber andererseits die Möglichkeit, die jeweilige Klemmbacke bezüglich der Spannfläche des Schenkels näher an die Kante des Profilträgerflansches heranzurücken.

Was die Spannmittel zur Verbindung der Klemmbacken eines Paares betrifft, so können dies zur Flanschoberfläche parallele Spannschrauben sein, die sich beispielsweise bei Verwendung von Gewindestangen mit an beiden Enden angeordneten Muttern leicht ausgehend von handelsüblichem Stangenmaterial auf die erforderliche Größe ablängen lassen. Diese Spannschrauben durchqueren zweckmäßig Bohrungen des Klemmbackenkörpers, haben also gegenüber der Flanschoberfläche einen gewissen Abstand. Damit soll aber eine Bauform nicht ausgeschlossen sein, gemäß der die Spannschrauben auf der Flanschoberfläche aufliegen und damit in den Klemmbackenkörpern über entsprechend zur Flanschoberfläche offene Ausnehmungen geführt sind.

Was das Führungselement eines jeden Klemmbackenpaares zur Abhebesicherung des Rohrschlittens betrifft, so kann dies ein im wesentlichen zur Flanschoberfläche paralleler Fortsatz wenigstens einer Klemmbacke jedes Klemmbackenpaares sein, wobei es zweckmäßig ist, den Fortsatz einstükkig an den Klemmbackenkörper anzuformen.

Will man die in Rede stehende Halterung außerdem zur Herstellung eines Festlagers verwenden, bei dem also der Rohrschlitten gegen Verschiebung auf der Flanschoberfläche zwischen den Klemmbackenpaaren gesichert ist, so kann dazu wenigstens eine Klemmbacke jedes Klemmbackenpaares eine in eine Ausnehmung des Rohrschlittens ragende Nase des Klemmbackenkörpers aufweisen. Auch diese Nase kann zweckmäßig einstückig am Klemmbackenkörper angeformt sein und sich im wesentlichen parallel zur Flanschoberfläche erstrecken.

Hier besteht aber auch zusätzlich die Möglichkeit, daß die Nase einen Fortsatz zur Bildung eines Führungselementes für den Rohrschlitten aufweist, wodurch entweder ein gesonderter Fortsatz zur Abhebesicherung des Rohrschlittens entfallen oder aber die Abhebesicherung des Rohrschlittens verstärkt werden kann.

Schließlich besteht im Rahmen der Erfindung die Möglichkeit, die Klemmbacken als Gußteile, Brennteile oder Schmiedeteile aus Metall herzustellen je nachdem, welche Herstellungsweise sich gerade als zweckmäßig und kostengünstig anbietet.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: eine Klemmbacke mit Flanschabschnitten unterschiedlicher Profilträger in Seitenansicht;
- Figur 2: eine perspektivische Darstellung einer Halterung zur Lagerung eines Rohrschlittens auf einem Profilträgerflansch;
- Figur 3: eine Halterung für schmale Profilträgerflansche gemäß Figur 2 in Seitenansicht und Draufsicht und
- Figur 4: eine Halterung für breite Profilträgerflansche gemäß Figur 2 in Seitenansicht und Draufsicht.

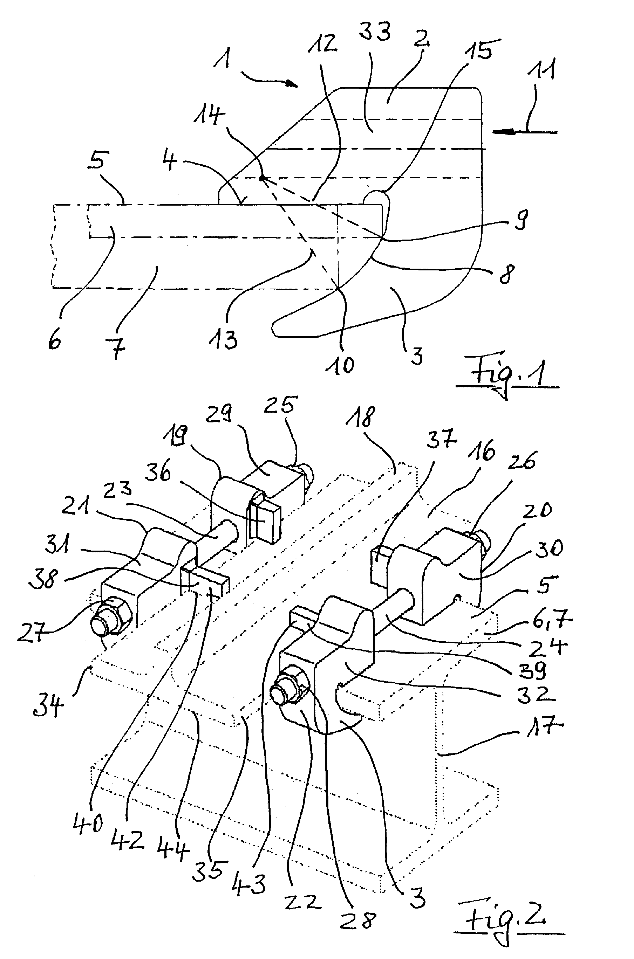

Figur 1 zeigt eine Klemmbacke 1 in Seitenansicht, die im wesentlichen aus einem quaderförmigen Klemmbackenkörper 2 und einem Schenkel 3 besteht, der sich schräg nach unterhalb des Klemmbackenkörpers von diesem fort erstreckt.

Der Klemmbackenkörper 2 ist mit einer Fläche 4 in Anlage an der Oberfläche 5 eines Profilträgerflansches 6 bzw. 7, während der Schenkel 3 mit seiner Spannfläche 8 in Anlage an der Kante 9 bzw. 10 des Profilträgerflansches 6 bzw. 7 ist.

Wie aus der Zeichnung ersichtlich, hat die Spannfläche 8 des Schenkels 3 über ihre Längserstreckung zum freien Ende des Schenkels 3 hin einen bogenförmigen, gegenüber dem Klemmbackenkörper 2 konkaven Verlauf. Wird die Klemmbacke 1 durch die in Richtung des Pfeiles 11 wirkenden Spannmittel von der Seite gegen den Rand des Profilträgerflansches 6 bzw. 7 gedrückt, hat dies zur Folge, daß die an den Kanten 9 bzw. 10 des Profilträgerflansches 6 bzw. 7 ausgeübten Spannkräfte, deren Richtung der Senkrechten 12 bzw. 13 auf die zugeordneten Abschnitte der Spannfläche 8 entspricht, dem Klemmbackenkörper 2 in einem Bereich durchqueren, der nahe dem Rand der Profilträgerflansche 6 bzw. 7 bleibt unabhängig davon , ob ein Profilträgerflansch 6 geringer Dicke oder ein Profilträgerflansch 7 großer Dicke vorliegt. Damit hat aber auch die an den Kanten 9 bzw. 10 auftretende Spannkraft nahe dem Rand der Profilträgerflansche 6 bzw. 7 ihr Widerlager in der Paarung von Spannfläche 4 des Klemmbakkenkörpers 2 und Oberfläche 5 des Profilträgerflansches 6 bzw. 7 mit der Folge, daß der Klemmbackenkörper 2 in Richtung des Pfeiles 11 verhältnismäßig sehr kurz ausgebildet sein kann ohne die Gefahr, daß er durch Wirkung der in Richtung des Pfeiles 11 angreifenden Spannmittel eine Kippbewegung ausführt.

Wie aus Figur 1 ersichtlich, hat der Verlauf der Spannfläche 8 im Bereich der Kante 9 gegenüber der Oberfläche 5 einen Winkel im Bereich von 80° und im Bereich der Kante 10 einen Winkel im Bereich von 23°, was einem Dickenbereich des Profilträgerflansches 6 bzw. 7 von 7,4 bis 19 mm entspricht, durch den die vorliegend üblicherweise vorkommenden Profilträgergrößen erfaßt sind.

Die Gestaltung der Spannfläche 8 ist zweckmäßigerweise so, daß deren bogenförmiger Verlauf kontinuierlich ist. Wie Figur 1 zeigt, ist es zweckmäßig und auch durchaus ausreichend, der Spannfläche 8 einen kreisbogenförmigen Verlauf um einen Mittelpunkt 14 zu geben, der im Material des Klemmbackenkörpers 2 liegt.

Der Übergang zwischen Fläche 4 des Klemmbackenkörpers 2 und Spannfläche 8 des Schenkels 3 erfolgt über eine abgerundete Kerbe 15, die oberhalb der Flanschoberfläche 5 im Klemmbackenkörper 2 gelegen ist. Damit ist in an sich bekannter Weise in diesem Bereich dem Auftreten hoher Kerbspannungen entgegengewirkt und es ist durch die besondere Anordnung der Kerbe 15 außerdem sichergestellt, daß die Spannfläche 8 ungehindert in ihrer gesamten Länge ausgenutzt werden kann also gerade auch für Profilträgerflansche 6 geringer Dicke.

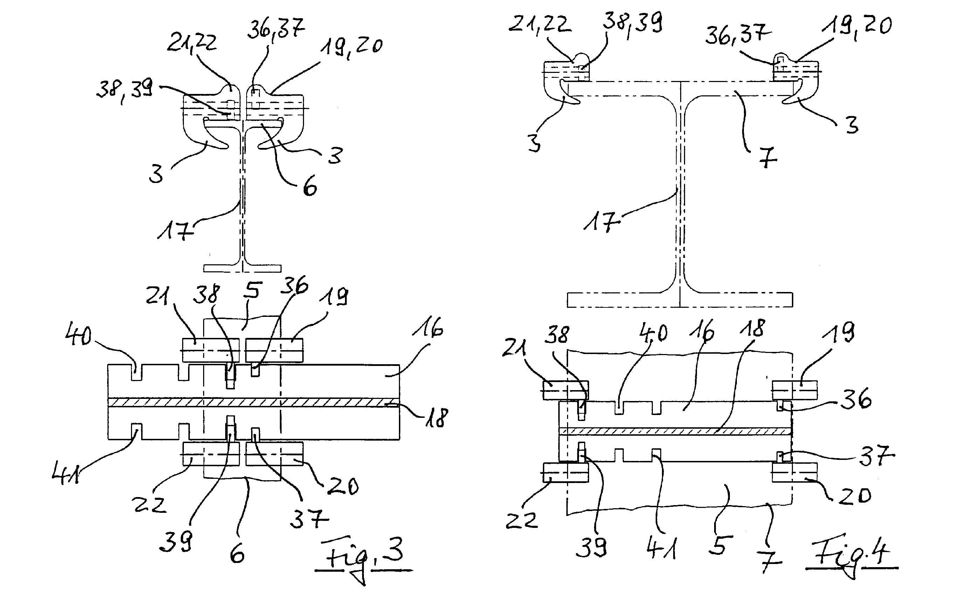

Figur 2 zeigt mit teilweise gestrichelt angedeuteten Teilen eine komplette Halterung eines Rohrschlittens 16 auf dem Flansch 6, 7 eines Profilträgers 17, wobei das nicht dargestellte, zu haltende und zu führende Rohr sich in Längsrichtung des Rohrschlittens 16 erstreckt und mit diesem verbunden, beispielsweise entlang dessen Profilkante 18 mit diesem verschweißt ist.

Die Halterung zur Lagerung des Rohrschlittens 16 besteht aus Klemmbakken 19 bis 22 der anhand der Figur 1 grundsätzlich beschriebenen Art, die paarweise durch Spannmittel miteinander verbunden sind, die im vorliegenden Falle aus Gewindestangen 23, 24 bestehen, auf die endständig Muttern 25 bis 28 geschraubt sind. Die Gewindestangen 23, 24 durchqueren die Klemmbackenkörper 29 bis 32 der Klemmbacken 19 bis 22 über in Figur 1 mit der Ziffer 33 versehene Durchgangsbohrungen im vorliegenden Falle so, daß sie oberhalb der Flanschoberfläche 5 zu dieser und zur Längserstreckung des Rohrschlittens 16 parallel angeordnet sind.

Da die Klemmbacken 19 bis 22 unmittelbar neben den Seitenkanten 34, 35 des Rohrschlittens 16 angeordnet sind, bilden sie für diesen eine Seitenführung. Zur Sicherung des Rohrschlittens 16 gegen Abheben von der Flanschoberfläche 5 dienen darüber hinaus an den Klemmbackenkörpern 29, 30 wenigstens einer Spannbacke 19, 20 jedes Spannbackenpaares vorliegend durch Schweißen angebrachte Fortsätze 36, 37, die den Rohrschlitten 16 auf der der Profilträgeroberfläche 5 abgewandten Seite übergreifen.

Um den Rohrschlitten 16 zur Bildung eines Festlagers auch gegen Verschieben in seiner Längsrichtung festzulegen, können die Klemmbackenkörper 31, 32 wenigstens einer Klemmbacke 21, 22 jedes Klemmbackenpaares mit einer im vorliegenden Falle angeschweißten Nase 38, 39 versehen sein, die in eine Ausnehmung des Rohrschlittens 16 ragt, von der in Figur 2 nur die Ausnehmung 40 ersichtlich ist. In Ergänzung kann die Nase 38, 39 auch noch einen Fortsatz 42, 43 tragen, der den Rohrschlitten 16 entsprechend den Fortsätzen 36, 37 als Abhebesicherung übergreift und die durch die Fortsätze 36, 37 gegebene Abhebesicherung ergänzen, aber auch an deren Stelle treten kann.

Findet die in Figur 2 dargestellte Halterung als verschiebbare Rohrhalterung Verwendung, so ist es in hier jedoch nicht ersichtlicher Weise noch üblich, die Paarung von Flanschoberfläche 5 des Profilträgers 17 und Gleitfläche 44 des Rohrschlittens 16 durch eine Gleitschicht beispielsweise aus Teflon zu ergänzen.

Die Figuren 3 und 4 zeigen die beschriebene Halterung in Anwendung bei zwei verschieden großen Profilträgern in Seiten- und Draufsicht unter Verwendung der mit Figur 2 eingeführten Bezifferung, wobei zur übersichtlicheren Gestaltung der Darstellung die Spannschrauben und im übrigen in den Seitenansichten auch die Rohrschlitten fortgelassen sind. Bezüglich der Beschreibung der Halterung wird zur Vermeidung von Wiederholungen auf die Beschreibung anhand der Figuren 1 und 2 verwiesen.

Wie die Gegenüberstellung der Figuren 3 und 4 zeigt, eignet sich ein und dieselbe Größe der insbesondere anhand der Figur 1 beschriebenen Klemmbacken zur Erstellung einer Halterung für Rohrschlitten 16 sowohl bei schmalen Profilträgerflanschen 6 als auch bei breiten und dicken Profilträgerflanschen 7, so daß die Herstellung und Bereithaltung unterschiedlicher Klemmbacken für alle praktisch vorkommenden Profilträgergrößen entfallen kann, ohne daß damit eine hinsichtlich ihrer Stabilität und Dauerhaftigkeit fragwürdige Halterung in Kauf genommen werden müßte. Dies ist der beschriebenen Ausbildung der Spannfläche der Klemmbackenschenkel 3 zu verdanken, in deren Folge die Klemmbacken bezogen auf Ihre Spannrichtung so kurz sein können, daß sie auch auf kleine Profilträger gemäß Figur 3 passen, während sie andererseits auch bei großen Profilträgern gemäß Figur 4 einen stabilen und dauerhaften Sitz der Halterung ergeben.

## Patentansprüche

1. Halterung zur Lagerung eines Rohrschlittens auf einem Flansch eines Profilträgers mit zwei im Abstand zueinander angeordneten Paaren von Klemmbacken, die paarweise durch Spannmittel miteinander verbunden sind und den Rohrschlitten durch wenigstens ein ihn auf der flanschabgewandten Seite hintergreifendes Führungselement jedes Klemmbackenpaares gegen Abheben vom Flansch sichern, wobei die Klemmbacken je eine Kante des Flansches mit einer Klemmnut umgreifen, die durch einen im wesentlichen quaderförmigen und auf der Flanschoberfläche aufliegenden Klemmbackenkörper und einen sich daran endständig anschließenden und schräg unterhalb des Klemmbackenkörpers von diesem fort sich erstrekkenden Schenkel gebildet ist,
dadurch gekennzeichnet,
daß die auf den Klemmbackenkörper (2, 29 - 32) zu gerichtete Spannfläche (8) des Schenkels (3) über wenigstens einen Teil dessen Längserstreckung einen bogenförmigen, gegenüber dem Klemmbackenkörper (2, 29 - 32) konkaven Verlauf aufweist.

2. Halterung nach Anspruch 1,
dadurch gekennzeichnet,
daß die Spannfläche (8) des Schenkels (3) den bogenförmigen Verlauf im Bereich dessen freien Endes aufweist.

3. Halterung nach Anspruch 1,
dadurch gekennzeichnet,
daß die gesamte Spannfläche (8) des Schenkels (3) einen bogenförmigen Verlauf aufweist.

4. Halterung nach einem der Ansprüche 1 bis 3,
dadurch gekennzeichnet,
daß die Spannfläche (8) des Schenkels (3) im Bereich dessen freien Endes gegenüber der Ebene der Flanschoberfläche (5) einen Winkel im Bereich von 15° bis 30° aufweist.

5. Halterung nach Anspruch 4,
dadurch gekennzeichnet,
daß der Winkel im Bereich von 23° liegt.

6. Halterung nach einem der Ansprüche 1 bis 5,
dadurch gekennzeichnet,
daß die Spannfläche (8) des Schenkels (3) im Bereich dessen Ansatzes am Klemmbackenkörper (2, 29 - 32) gegenüber der Ebene der Flanschoberfläche (5) einen Winkel im Bereich von 70 bis 90° aufweist.

7. Halterung nach Anspruch 6,
dadurch gekennzeichnet,
daß der Winkel im Bereich von 80° liegt.

8. Halterung nach einem oder mehreren der Ansprüche 1 bis 7,
dadurch gekennzeichnet,
daß der bogenförmige Verlauf der Spannfläche (8) des Schenkels (3) durch einen Kreisbogen gebildet ist.

9. Halterung nach einem oder mehreren der Ansprüche 1 bis 8,
dadurch gekennzeichnet,
daß der Klemmbackenkörper (2, 29 - 32) sich mit seinem freien Ende auf der Flanschoberfläche (5) wenigstens soweit erstreckt, daß die Senkrechten (12, 13) auf allen Spannflächenabschnitten (8) des Schenkels (3) das Material des Klemmbackenkörpers (2, 29 - 32) durchqueren.

10. Halterung nach einem oder mehreren der Ansprüche 1 bis 9,
dadurch gekennzeichnet,
daß im Übergangsbereich zwischen auf der Flanschoberfläche (5) aufliegender Fläche (4) des Klemmbackenkörpers (2, 29 - 32) und Spannfläche (8) des Schenkels (3) eine abgerundete, oberhalb der Flanschoberfläche (5) im Klemmbackenkörper (2, 29 - 32) gelegene Kerbe (15) angeordnet ist.

11. Halterung nach einem oder mehreren der Ansprüche 1 bis 10,
dadurch gekennzeichnet,
daß die Spannmittel zur Flanschoberfläche (5) parallele Spannschrauben (23, 23, 25 bis 28) sind, und daß die Spannschrauben (23, 24, 25 bis 28) die Klemmbacken (1, 19- 22) über Bohrungen (33) des Klemmbackenkörpers (2, 29 - 32) durchqueren.

12. Halterung nach Anspruch 11,
dadurch gekennzeichnet,
daß die Spannschrauben (23, 24, 25 - 28) mit Abstand zur Flanschoberfläche (5) angeordnet sind.

13. Halterung nach einem oder mehreren der Ansprüche 1 bis 12,
dadurch gekennzeichnet,
daß das Führungselement ein im wesentlichen zur Flanschoberfläche (5) paralleler Fortsatz (36, 37) wenigstens einer Klemmbacke (1, 19- 22) jedes Klemmbackenpaares ist.

14. Halterung nach Anspruch 13,
dadurch gekennzeichnet,
daß der Fortsatz (36, 37) einstückig an den Klemmbackenkörper (29, 30) angeformt ist.

15. Halterung nach einem oder mehreren der Ansprüche 1 bis 14,
dadurch gekennzeichnet,
daß wenigstens eine Klemmbacke (21, 22) jedes Klemmbackenpaares eine in eine Ausnehmung (40, 41) des Rohrschlittens (16) ragende Nase (38, 39) des Klemmbackenkörpers (31, 32) aufweist.

16. Halterung nach Anspruch 15,
dadurch gekennzeichnet,
daß die Nase (38, 39 einstückig am Klemmbackenkörper (31, 32) angeformt ist und sich im wesentlichen parallel zur Flanschoberfläche (5) erstreckt.

17. Halterung nach einem oder mehreren der Ansprüche 1 bis 16,
dadurch gekennzeichnet,
daß die Nase (38, 39) einen Fortsatz (42, 43) zur Bildung eines Führungselementes für den Rohrschlitten (16) aufweist.

18. Halterung nach einem oder mehreren der Ansprüche 1 bis 17,
dadurch gekennzeichnet,
daß die Klemmbacken (1, 19- 22) Gußteile, Brennteile oder Schmiedeteile aus Metall sind.
